# EUROPEAN PATENT APPLICATION

(11) **EP 2 221 878 A2**
(43) Date of publication of application: **25.08.2010**
(21) Application number: 09163739.7
(22) Date of filing: 25.06.2009
(51) Int. Cl.: H01L 31/042

(54) **Device to determine the voltage and currents delivered by a photovoltaic panel, installation equipped with such a device and method of adaptation of the impedance from such a device**

(30) Priority: 18.02.2009 ES 200900449
(71) Applicant: Montajes Y Proyectos Electrotecnicos, S. L., 08191 Rubi (ES)
(72) Inventor: Herguido Cartes, Sebastián, 08191, RUBI (ES)
(74) Representative: Ponti Sales, Adelaida

(57) **Abstract**

A device is proposed to determine the voltage and the current delivered by a first photovoltaic panel with measuring means of current and voltage, first and second connection terminals at the input of the first panel, which further comprises a third connection terminal to the output terminal of a second panel, a fourth connection terminal in parallel with the second connection terminal to a third photovoltaic panel and wireless sending means of the instantaneous current and voltage measured, the measuring means being conveniently connected, so that it is possible to remotely know the operating point of a photovoltaic panel disposed in series with another two photovoltaic panels.

## Description

The present invention relates to a device to determine the voltage and currents delivered by a photovoltaic panel, which makes it possible to perform a real-time adaptation of the impedance to maximize the power delivered by the installation whereto the panel belongs, and all in conditions of safety. Likewise, it relates to an installation equipped with such a device and to a method of adaptation of the impedance from such a device.

### BACKGROUND OF THE INVENTION

It is known that the operating conditions of one or more panels of a photovoltaic installation can considerably harm the power delivered, i.e. the overall efficiency of the installation.

Specifically, the operating conditions are strongly influenced by different environmental conditions such as solar irradiation, temperature and solar speed, and by the variation in electrical characteristics of the different electrical components over time.

This situation, which is very typical, seriously harms the return on investment of photovoltaic installations, wherein continuously operating at an operating point of maximum power is crucial.

To remedy this, measurement of the individual current and voltage of each panel by multimeters or suitable commercial instrumentation is known.

However, there are currently no suitable field-strength measurement systems which can give an objective result of the output of the photovoltaic panels included in an electrical energy generation system.

Before the installation, calculations are made which approximate the final result, starting from the conventional field-strength measurements which have been previously made. These calculations record as losses some circuits which could be recorded as less profitable and not as losses. To analyse profitability and, if applicable, the feasibility of a power improvement in solar installations, it is necessary to start from data acquired in real time.

In a photovoltaic system with accumulation of electrical energy or small systems, a conventional measurement device may be sufficient.

But the individual measurement of the electrical operating parameters of each panel is made very difficult and even impossible when the panels form part of a series / parallel array which places them at a high potential, which causes less measurement precision due to a full scale much higher than the range of measurements sought.

Panel manufacturers guarantee a peak power in certain circumstances and provide details on the possible deviations thereof. They also define a long-term degradation of the panels as percentage at the end of a period of between 10 and 20 years.

Obviously, the degradation process does not have to be uniform throughout said period. Therefore, over time, variable power dispersions occur which are frequently higher than those estimated.

This state of the art has been based on the photovoltaic systems currently installed connected to the grid in the European Union.

In most known installations, working voltages of 300 to 900 V DC are used, in order to minimize wiring costs and static to AC power inverters.

Consequently, panels are connected in series, to reach the indicated working voltages, and these series are connected in parallel to reach the powers chosen for the inverters.

Most flat panels have an individual nominal voltage between 20 and 40 V DC. In Thin Film technologies this range of voltages rises until exceeding 100 V DC. The concentration systems have various architectures and their voltages are positioned between 80 and 100 V DC.

Once the specific needs of adaptation of impedances of a plant has been determined, currently no circuits exist to perform this correction dynamically and with a cost which makes it profitable for a photovoltaic generation plant connected to the grid.

Therefore, the need to have a device which resolves said drawbacks in the state of the art is evident, i.e. which makes it possible to measure with accuracy and in real time, and in conditions of safety, the electrical operating parameters of the individual panels, and use them for dynamically adapting the impedance of each individual panel to maximize the power delivered by the installation.

### DESCRIPTION OF THE INVENTION

Therefore, the present invention proposes a device to determine the voltage in terminals of a first photovoltaic panel and of the current delivered thereby, equipped with:
- measuring means of said current,
- measuring means of said voltage,
- a first connection terminal adapted to be connected to the input terminal of the first photovoltaic panel,
- a second connection terminal adapted to be connected to the output terminal of the first photovoltaic panel,
which is **characterized in that** it comprises
- a third connection terminal adapted to be connected to the output terminal of a second photovoltaic panel,
- a fourth connection terminal in parallel with the second connection terminal and adapted to be connected to a third photovoltaic panel,
- the measuring means of said current being connected to said first and third terminals and the measuring means of said voltage between the first and second terminals,
- wireless sending means of the instantaneous current and voltage measured by said measuring means of the current and of the voltage,
such that it is possible to remotely know the operating point of a photovoltaic panel disposed in series with another two photovoltaic panels.

With the device described, the problems of the state of the art are solved since:
- The connection system and the capacity to remotely send data make it possible to know, without the need to measure voltages in high voltage conditions, the current and the voltage of an individual panel.
- The connections are especially devised to be connected easily and in minimum time to an already existing installation, therefore, it is applicable to an existing installation.
- When reduced voltages are measured, the full scale is reduced and the precision increases.

Preferably, the third terminal and the fourth terminal are coupled male/female or coupled female/male respectively and more preferably the first terminal and the third terminal are coupled male/female or coupled female/male respectively and even more preferably, the third terminal and the fourth terminal are coupled male/female or coupled female/male respectively, so that it is possible to connect devices in panels in series using a minimum number of connections.

Likewise, the invention relates to an installation for producing photovoltaic solar power equipped with a plurality of photovoltaic panels connected in series, which comprises a device like that described above, with its variants, connected between two consecutive panels. Due to the simplicity of the device of the invention and to its ease of connection, it is possible to connect a plurality of these to an array of photovoltaic panels which form an installation.

Preferably, this installation comprises a device such as that described above, with its variants, connected between the input of the array and the first panel and between the last panel and the output of the array, so that it is possible to know the electrical operating parameters of the end panels of a branch.

Finally, the invention relates to a method of adaptation of the impedance of an installation of photovoltaic panels connected in series, which comprises the steps consisting of:
- Remotely obtaining in real time the operating point of each panel using the device of the invention,
- Adapting the impedance of each panel to obtain the maximum power delivered by the installation.

### BRIEF DESCRIPTION OF THE DRAWINGS

For a better understanding of the foregoing, two drawings are attached wherein, schematically and only by way of non-limitative example, a case is represented of a practical embodiment.
Figure 1 is a schematic representation of the device of the invention and of the connection topology between panels connected in series.
Figure 2 is a plan view of the device of the invention.

### DESCRIPTION OF A PREFERRED EMBODIMENT

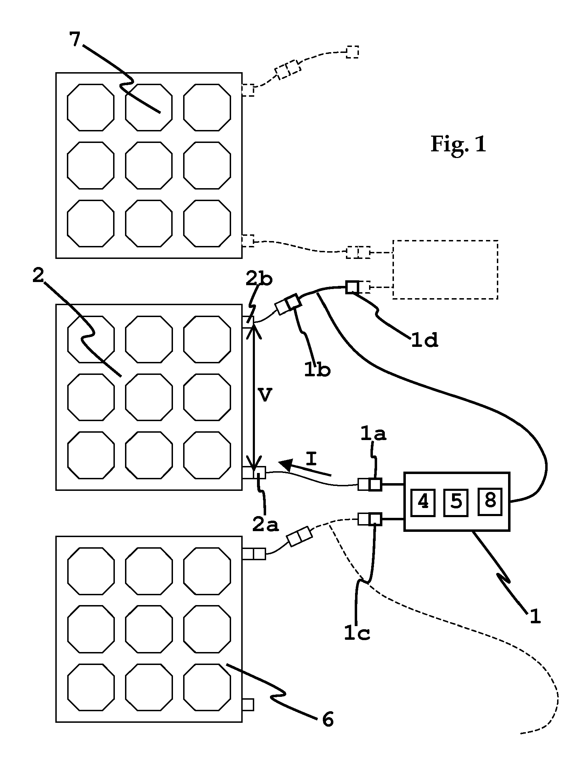

As can be schematically observed in figure 1, in general the invention relates to devices 1 to determine the voltage V in terminals 2a and 2b of a first photovoltaic panel 2 and of the current I delivered thereby.

Specifically, and in a manner already known, these devices comprise:
- measuring means 4 of the current I,
- measuring means 5 of the voltage V,
- a first connection terminal 1a adapted to be connected to the input terminal 2a of the first photovoltaic panel 2 and
- a second connection terminal 1b adapted to be connected to the output terminal 2b of the first photovoltaic panel 2,

Specifically, the device of the invention is characterized, with respect to said state of the art, in that it comprises:
- a third connection terminal 1c adapted to be connected to the output terminal of a second photovoltaic panel 6,
- a fourth connection terminal 1d in parallel with the second connection terminal 1b and adapted to be connected to a third photovoltaic panel 7,
- the measuring means 4 of said current I being connected to said first and third terminals and the measuring means 5 of said voltage between the first and second terminals and
- wireless sending means 8 of the instantaneous current and voltage measured by said measuring means 4, 5 of the current and of the voltage.

With these characteristics, it is possible to remotely know the operating point of a photovoltaic panel 2 disposed in series with another two photovoltaic panels 6, 7, which enables knowing operating parameters I, V of the panel with a full scale of optimum reading and also performing the reading in real time and in conditions of safety, thanks to the remote reading sending unit, and to the possibility of measuring said parameters without the need for performing the electrical measurements taking the earth potential as reference.

The remote sending means can be of any type by radiofrequency, or by GPRS or by any means suitable for sending information in real time. They can also be optical couplings in combination with data transmission cables, or a proximity reading system.

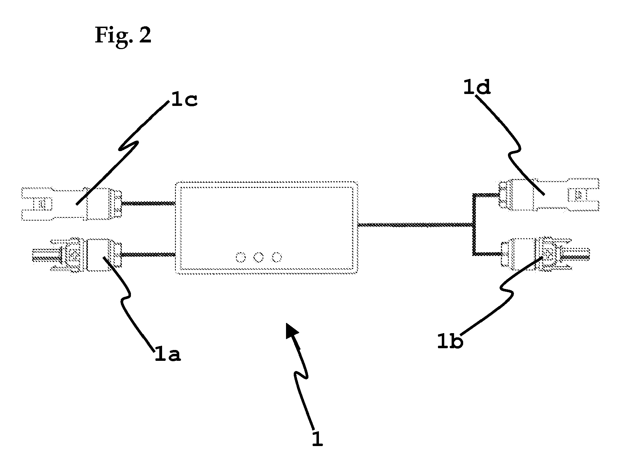

As can be observed in figure 2, according to a preferred embodiment of the invention, the third terminal 1c and the fourth terminal 1d are coupled male/female or coupled female/male respectively, the first terminal 1a and the third terminal are coupled male/female or coupled female/male respectively and the third terminal 13 and the fourth terminal 1d are coupled male/female or coupled female/male respectively.

In this way, a device is provided already prepared to be connected to an existing installation and which further permits its fast and easy interconnection with another device, as illustrated by the broken lines of figure 1.

As already mentioned, the device of the invention finds an especially advantageous application in photovoltaic solar power production installations, in particular in installations equipped with a plurality of photovoltaic panels connected in series, whether they are combined with arrangements in parallel or not.

Thanks to its connections system, the device can be connected between adjacent panels or on the first or last panels, in this case substituting the connection with a panel by the connection with the input or output of the circuit of panels in series.

The device also constitutes the base to carry out on the installation described a method of adaptation of the impedance of each one of the photovoltaic panels connected in series, by the following steps:
- Remotely obtaining the operating point of each panel using a device as claimed in claims 1 to 4,
- Dynamically adapting the impedance of each panel to obtain the maximum power delivered by the installation.

Figure 2 illustrates a particular embodiment of the device of the invention, wherein an ARISTON CA 402 N box and male type Tyco 6-1394461, and female type 5-1394462-5 connectors have been used.

## Claims

1. Device (1) to determine the voltage (V) in terminals (2a, 2b) of a first photovoltaic panel (2) and of the current (I) delivered by it, equipped with
- measuring means (4) of said current (I),
- measuring means (5) of said voltage,
- a first connection terminal (1a) adapted to be connected to the input terminal (2a) of the first photovoltaic panel (2),
- a second connection terminal (1b) adapted to be connected to the output terminal (2b) of the first photovoltaic panel (2),
**characterized in that** it comprises
- a third connection terminal (1c) adapted to be connected to the output terminal of a second photovoltaic panel (6),
- a fourth connection terminal (1d) in parallel with the second connection terminal (1b) and adapted to be connected to a third photovoltaic panel (7),
- the measuring means (4) of said current (I) being connected to said first and third terminals and the measuring means (5) of said voltage between the first and second terminals,
- wireless sending means (8) of the instantaneous current and voltage measured by said measuring means (4, 5) of the current and of the voltage,
so that it is possible to remotely know the operating point of a photovoltaic panel (2) disposed in series with another two photovoltaic panels (6, 7).

2. Device (1) according to the preceding claim wherein the third terminal (1c) and the fourth terminal (1d) are coupled male/female or coupled female/male respectively.

3. Device (1) according to any of the preceding claims, wherein the first terminal (1a) and the third terminal are coupled male/female or coupled female/male respectively.

4. Device (1) according to any of the preceding claims, wherein the third terminal (13) and the fourth terminal (1d) are coupled male/female or coupled female/male respectively.

5. Installation for producing photovoltaic solar power equipped with a plurality of photovoltaic panels connected in series, which comprises a device according to any of claims 1 to 4 connected between two consecutive panels.

6. Installation according to the preceding claim, which comprises a device according to any of claims 1 to 4 connected between the input of the array and the first panel and between the last panel and the output of the array.

7. Method of adaptation of the impedance of an installation of photovoltaic panels connected in series, **characterized in that** the steps consist of:
- Remotely obtaining the operating point of each panel using a device according to any of claims 1 to 4,
- Adapting the impedance of each panel to obtain the maximum power delivered by the installation.
